# EUROPÄISCHE PATENTSCHRIFT

(11) **EP 0 740 619 B1**
(45) Veröffentlichungstag und Bekanntmachung des Hinweises auf die Patenterteilung: **22.10.1997**
(21) Anmeldenummer: 95904964.4
(22) Anmeldetag: 19.01.1995
(51) Int. Cl.: B60M 1/28

(54) **EINRICHTUNG ZUM VERLEGEN EINES DRAHTES, SEILES ODER DGL.**
DEVICE FOR LAYING WIRES, CABLES OR THE LIKE
DISPOSITIF DE POSE DE FILS METALLIQUES, CABLES OU SIMILAIRES

(30) Priorität: 21.01.1994 AT 115/94
(43) Veröffentlichungstag der Anmeldung: 06.11.1996
(73) Patentinhaber: ELIN ENERGIEVERSORGUNG GESELLSCHAFT m.b.H., 1141 Wien (AT)
(72) Erfinder: PACH, Karl, A-1210 Wien (AT)
(74) Vertreter: Rieberer, Stefan, Dipl.-Ing.
(86) Internationale Anmeldenummer: AT9500010
(87) Internationale Veröffentlichungsnummer: WO9519895

(56) Entgegenhaltungen:
- EP-A- 0 056 097
- EP-A- 0 416 136
- WO-A-92/15470
- DE-A- 2 012 248
- FR-A- 2 129 540

## Beschreibung

Die Erfindung betrifft eine Einrichtung zum Verlegen eines Drahtes, Seiles oder dgl., insbesondere eines geschlagenen Mediums, vorzugsweise einer Oberleitung oder eines Fahrleitungssystems, oberhalb einer Fahrstrecke mit einem Fahrzeug bzw. einer Fahrzeuggarnitur, auf dem mindestens eine Drahttrommel gelagert ist und wenigstens ein heb-, senk- und schwenkbarer Hubarm zum Anheben des von der Drahttrommel ablaufenden Drahtes auf die Montagehöhe oberhalb der Fahrstrecke vorgesehen ist, wobei pro Draht ein Hubarm vorgesehen ist und am freien Ende des Hubarmes eine einen gelagerten Grundrahmen aufweisende Vorrichtung zum Ausfahren, Einholen bzw. Festhalten des Drahtes dreh- und/oder schwenkbar angeordnet ist.

Aus der WO 92/15470 ist eine derartige Einrichtung bekannt. Diese Vorrichtung zum Ausfahren, Einholen bzw. Festhalten des Drahtes weist einen um seinen Mittelpunkt drehbar gelagerten Grundrahmen auf aufden mindestens bei auf je einer Platte angeordnete Rollenpaare durch die der Draht geführt ist, vorgesehen sind. Die Rollenpaare sind jeweils um die Welle einer Rolle auf dem Grundrahmen mittels Federspeicher schwenkbar, wobei die Drehpunkte diametral gegenüberliegen und die Rollen bzw. das Rollenpaar antreibbar sind. Diese Vorrichtung hat sich dahingehend bestens bewahrt, daß die Positionierung der Oberleitung bei der Montage in der endgültigen Verlegelage ist.

Nachteilig ist bei dieser Vorrichtung, daß bei Verlegung von insbesondere geschlagenen Medien, wie mehradrigen Seilen, sogenannte Korbbildungen durch die Preßkraft der Rollen auftreten können.

Darüber hinaus ist aus der DE-PS 22 11 247 eine Vorrichtung zum vorläufigen Installieren einer Oberleitung oberhalb einer Schienenstrecke mit einem Schienenfahrzeug bekannt. Auf diesem Schienenfahrzeug sind die Drahttrommeln und ein Hubarm zum Anheben der Drähte auf die Höhe der Befestigungshaken vorgesehen. Ferner ist den Drahttrommeln eine Zugspannungs-Steuervorrichtung, mit der sowohl auf das Tragseil als auch auf den Fahrdraht eine Längszugkraft aufbringbar ist, nachgeordnet. Nachteilig bei deser Vorrichtung ist einerseits, daß das Tragseil und der Fahrdraht immer in der gleichen Vertikalebene verlegt werden muß und anderseits, daß das unter Zug stehende Seil nach der Zugspannungs-Steuervorrichtung eine Richtungsänderung erfährt. Darüberhinaus ist auch der Aufwand für die Hakensuchvorrichtung und für die Vorrichtung zum Abgeben der provisorischen Hänger überaus beträchtlich.

Ferner ist aus der EP 56097 ein Verfahren zur Montage eines Fährdrahtes, wobei der Fahrdraht zwei paralleliaufende Komponenten aufweist, bekannt. Eine Komponente ist ein zugspannungsarmes, stromführendes Schleifleitungsprofil und die andere Komponente ist ein Spannprofil, wobei die Schleifleitungskomponente ohne Abspannung der Tragkomponente auswechselbar ist.

Aus der DE-OS 21 22 099 ist eine Vorrichtung zum Verlegen von ummantelten Fahrdraht bekannt. Diese Vorrichtung weist unter anderem einen Trommeltransportwagen mit einer Leitertrommel auf, bei der eine Backenbremse vorgesehen ist. Nachteilig dabei ist, daß aufgrund der vielen Fahrzeugeinheiten für die Verlegung ein erheblicher Personal- und Arbeitsaufwand erforderlich ist. Außerdem leidet durch die Labilität der Einheit die Kontinuität und die Qualität der verlegten Leitung.

Gemaß der DD-PS 137 909 ist eine Seilführungsrolle zum Verlegen von Seitenfahrleitungen bekannt.

Ferner ist noch in der DD-PS 128 887 ein Verfahren zur Montage oder Demontage von Fahrleitungen für Schienenbahnen beschrieben. Dabei wird die Drahttrommel angetrieben und der Draht über einen Umlenkmechanismus geführt. Nachteilig dabei ist, daß der unter Zugspannung stehende Draht einer oder mehrer Richtungsänderungen ausgesetzt ist.

Weiters ist noch aus der DE-OS 20 12 248 die Montage von Fahrdrähten bekannt, wobei ein Gerätewagen eine Führungsvorrichtung besitzt, mittels derer die Seile in die entsprechende Lage gebracht werden. Jedoch weist diese Vorrichtung nur einen Hubarm für beide Drähte aufund die Drähte können auch nicht in Montagehöhe ausgefahren, eingeholt bzw. festgehalten werden.

Aufgabe der Erfindung ist es, eine Einrichtung der eingangs zitierten Art zu schaffen, mit der einerseits die obigen Nachteile vermieden werden und mit der anderseits ein kontinuierliches Verlegen einer Oberleitung, insbesondere eines Oberleitungssystems, das auch ein geschlagenes Medium, wie ein mehradriges Seil, beinhaltet, in rationellster und in qualitätsmäßig hochstehender Weise erfolgen kann.

Die erfindungsgemäße Einrichtung ist dadurch gekennzeichnet, daß am Grundrahmen oder auf einer am Grundrahmen angeordneten Platte zwei mit mindestens zwei Rillen am Umfang versehene, gegeneinander geneigte, Scheiben oder Räder in einer Ebene gelagert sind, wobei das Seil in den Rillen über beide Scheiben geführt ist. Mit der Erfindung ist es nicht nur möglich, den Draht oder das Seil in der nach der Montage endgültigen Lage bei der Montage zu positionieren, sondern auch erstmals gleichzeitig eine ausgezeichnete Qualität der zu verlegenden mehradrigen Seile zu erzielen. Durch den Umschließungswinkel des zu verlegenden Seiles über die beiden Scheiben in Zusammenwirken mit dem Reibungskoeffizienten können größte Zugspannungen beherrscht werden, ohne daß das Seil Quetschungen ausgesetzt ist. Unregelmäßige, radiale Krafteinwirkungen auf die Seilaußenschicht sind mit dieser Vorrichtung ausgeschlossen.

Nach einem weiteren Merkmal der Erfindung sind die Scheiben über Hydraulikaggregate als Zug- und/oder Bremsmaschinen verwendbar. Durch die Ausführung der Hydraulikaggregate sowohl zum Bremsen als auch zum Ziehen sind immense Montagevorteile die Folge.

Nach einem besonderen Merkmal der Erfindung ist die Platte oder ein Rahmen am Grundrahmen zur Grundrahmenebene senkrecht und parallel zur Laufrichtung des Seiles angeordnet. Bei einer Verschwenkbarkeit des Hubarmes über das Bahnprofil hinaus, ist die senkrechte Scheibenanordnung günstiger.

Gemäß einer besonderen Ausgestaltung der Erfindung dient der aus Formrohren gebaute Rahmen für die Hydraulikaggregate als Ölbehälter und die hydraulische Beaufschlagung, vorzugsweise beider Hydraulikaggregate erfolgt über ein, entsprechend umschaltbare, hydraulische Pumpen und Ventile aufweisendes Regelsystem. Dadurch kann das zu verlegende Seil vom Stillstand bis zur maximalen Laufgeschwindigkeit bei konstanter Zugkraft stufenlos und ruckfrei bewegt werden.

Nach einer weiteren Ausgestaltung der Erfindung ist der Grundrahmen mittig schwenkbar gelagert. Durch die Schwenkbarkeit des Grundrahmens ist ein knickfreies Auslaufen des Seiles gewährleistet.

Gemäß einem weiteren Merkmal der Erfindung erfolgt die schwenkbare mittige Grundrahmenlagerung in einer am Hubarm angeordneten Zapfenlagerung. In Zusammenhang mit der Schwenkbarkeit ist dadurch eine kardanische Lagerung der Vorrichtung auf einfachste Weise gegeben.

Nach einer besonderen Ausgestaltung der Erfindung liegt die Zapfenlagerung des Grundrahmens unter dem Kraftausleitungspunkt der gesamten Vorrichtung. Dadurch ist eine Selbstausrichtung der Vorrichtung in Arbeitsrichtung immer gegeben.

Gemäß einem weiteren Merkmal der Erfindung ist vor bzw. nach den Scheiben eine Einlauf- bzw. Auslauf-Rollenbatterie angeordnet, wobei die Auslauf-Rollenbatterie langer als die Einlauf-Rollenbatterie ausgeführt ist. Durch die Verlängerung der Auslauf-Rollenbatterie ist eine einwandfreie Führung des zu verlegenden Seiles gegeben, und die Selbstausrichtung der ganzen Einrichtung erfolgt durch das gespannte Medium.

Die Erfindung wird anhand eines in der Zeichnung dargestellten Ausführungsbeispieles näher erläutert. Fig. 1 zeigt die schematische Darstellung der Einrichtung beim Verlegen eines Oberleitungssystems für Schienenfahrzeuge, Fig. 2 und 3 die Vorrichtung zum Ausfahren, Einholen und Festhalten des Seiles.

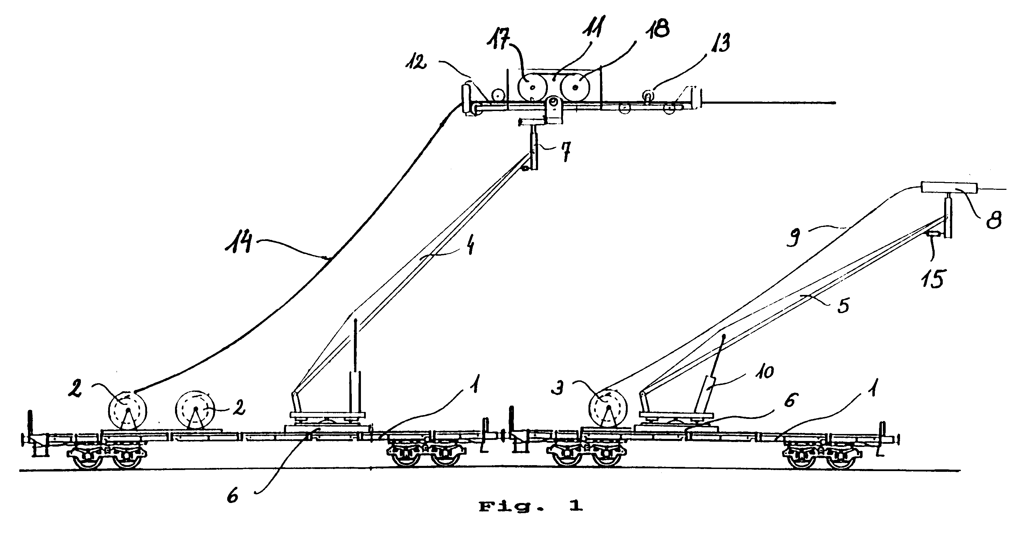

Gemäß der Fig. 1 weist das auf Schienen verfahrbare Fahrzeug 1 bzw. die Fahrzeuggarnitur, die natürlich auch selbstfahrend ausgebildet sein kann, zwei Waggons auf Auf der Ladefläche je des Fahrzeuges 1 ist ein Hubarm 4, 5 und die Draht- 3 bzw. Seiltrommel 2 vorgesehen. Die Hubarme 4, 5 sind jeweils über ein Drehgestell 6 auf der Ladefläche des Fahrzeuges 1 montiert, sodaß die Hubarme verschwenkt werden können. Am freien Ende jedes Hubarmes 4, 5 ist über eine Lagerung 7 die Vorrichtung 8 bzw. 11 zum Ausfahren, Einholen bzw. Festhalten des Drahtes 9 oder Seiles 14 angeordnet. Zum Heben und Senken des Hubarmes 4, 5 ist ein Hydraulikzylinder 10 vorgesehen. Natürlich kann der Hubarm 4, 5 auch hydraulisch ein- und ausfahrbar ausgebildet sein. Die Vorrichtung 8 bzw. 11 ist wie später noch beschrieben, derart im Hubarm 4, 5 gelagert, daß der frei von der Drahttrommel 2, 3 ablaufende Draht 9 bzw. das Seil 14 bei der Montage in der endgültigen Verlegelage positioniert ist. Die Verstellung der Vorrichtung 8 bzw. 11 in der Lagerung 7 erfolgt über den Hydraulikzylinder 15.

Um auch Erd- und Verstärkungsleitungen mit dieser Einrichtung verlegen zu können, ist die Auslegeweite der Hubarme 4, 5 so bemessen, daß auch außerhalb des üblichen Verlegeprofils, also nicht nur über den Schienen, sondern auch im Bereich über dem Bahndamm gearbeitet werden kann.

Die Vorrichtung 8 zur Verlegung des Fahrdrahtes 9 - auf die hier nur kurz eingegangen wird - weist einen kardanisch gelagerten Grundrahmen und vier Rollenpaare auf, wobei jeweils zwei Rollenpaare gegenüberliegend angeordnet sind, sodaß der Draht 9 dazwischen geführt ist. Die Rollenpaare sind jeweils in Platten gelagert und werden gemeinsam über einen Zahntrieb angetrieben. Das Antriebsritzel ist mit einem Hydraulikmotor verbunden. Jedes Rollenpaar ist jeweils um eine Weile einer Rolle schwenkbar gelagert, wobei die Schwenkbewegung über Hydraulikzylinder ausgeführt wird. Die Drehpunkte dieser korrespondierenden Rollenpaare liegen diametral gegenüber, wodurch die Vorrichtung für verschiedenste Drahtstärken verwendet werden kann. Die auf den Draht 9 einwirkenden Kräfte können über die Hydraulikzylinder eingestellt werden.

Die Vorrichtung 11 zum Verlegen eines mehradrigen Seiles 14 weist eine kurze Einlauf-Rollenbatterie 12 und eine längere Auslauf-Rollenbatterie 13 auf. Darüber hinaus ist die Vorrichtung 11 derart gelagert, daß die Zapfenlagerung 7 für den Grundrahmen 22 unter dem Kraftausleitungspunkt der gesamten Vorrichtung 11 liegt.

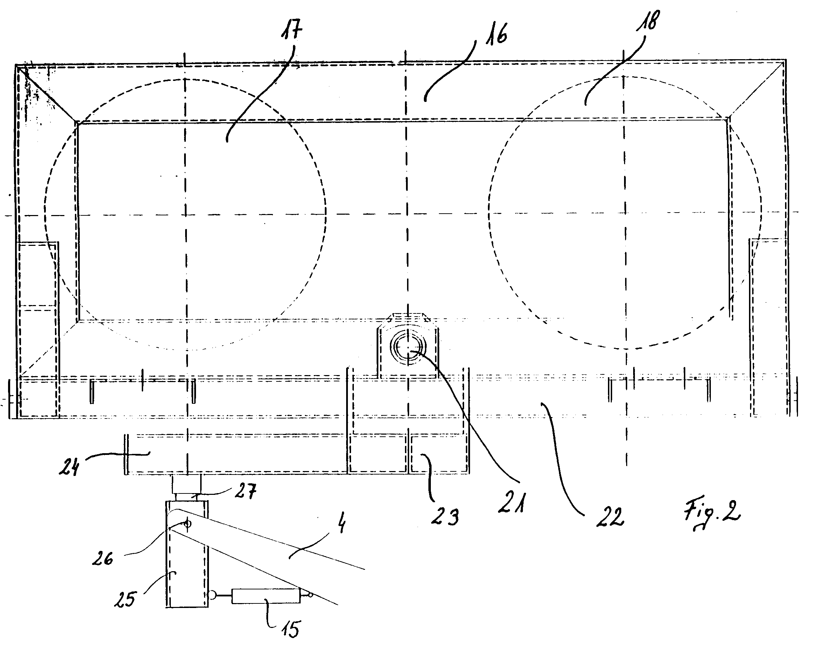

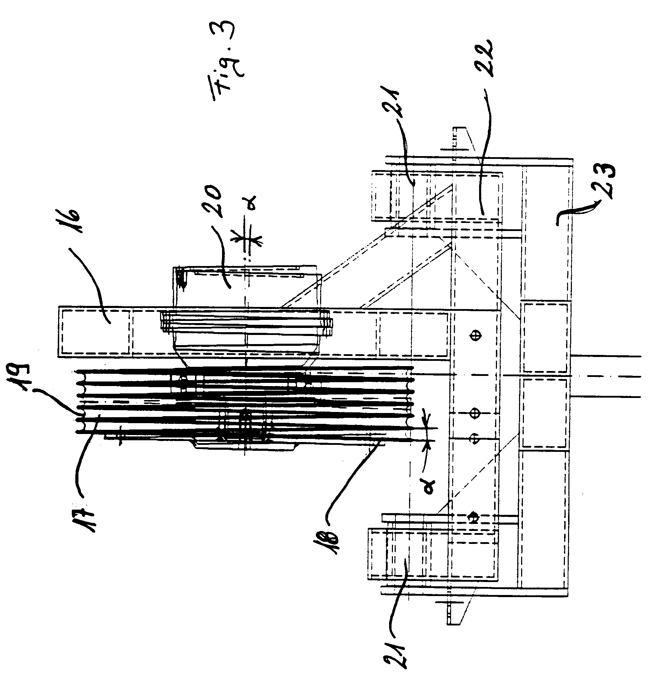

Eine eingehendere Erklärung der Vorrichtung 11 erfolgt an Hand der Fig. 2 und 3. Auf einem Gründrahmen 22 ist eine zur Grundrahmenebene senkrecht und parallel zur Laufrichtung des Seiles angeordnete Platte 16 vorgesehen. Diese Platte 16 kann auch ein Rahmen sein. In dieser Platte 16 oder in diesem Rahmen sind zwei Scheiben oder Räder 17 bzw. 18, vorzugsweise über Wellen, gelagert. Diese Scheiben 17, 18 weisen am Umfang mehrere Rillen 19 zur Führung des Seiles 14 auf Angetrieben werden diese Scheiben über Hydraulikaggregate 20.

Der Grundrahmen 22 ist beidseitig mittig mit einer Lagerung 21 versehen.

Die Vorrichtung 11 ist am freien Ende des Hubarmes 4 kardanisch gelagert. Dabei ist der Grundrahmen 22 um die Lagerung 21 in Richtung des durchlaufenden Seiles 14 schwenkbar. Der Balken 23 für die Lagerung 21 weist einen zur Grundrahmenebene parallelen Arm 24 auf Darüber hinaus ist ein Wellenstummel 27 vorgesehen, der in einem Rohr 25 und im Arm 24 jeweils drehbar gelagert ist. Über den Drehpunkt 26 ist das Rohr 25 schwenkbar am Ende des Hubarmes 4 befestigt. Das Rohr 25 wird über den Hydraulikzylinder 15, der einerseits am Rohr 25 und anderseits am Hubarm 4 befestigt ist, bewegt. Der Hydraulikzylinder 15 ist mit dem Hydraulikzylinder 10 direkt über Leitungen verbunden, sodaß das Rohr 25 immer senkrecht steht.

Wie insbesondere auch aus Fig. 3 ersichtlich, sind die beiden Scheiben 17, 18 gegeneinander geneigt. Dadurch können die Scheiben 17, 18 am Umfang mit nebeneinanderliegenden Laufrillen 19 versehen werden.
Das Seil 14 tritt über die Einlauf-Rollenbatterie 12 ein, verläuft neben der ersten Scheibe 18, und wird sofort auf die zweite Scheibe weitergezogen und umschlingt mit 180° diese Scheibe, wird auf die erste Scheibe wieder rückgeführt und umschlingt diese mit 180°. Entsprechend der Rillenanzahl wird die Führung des Seiles wiederholt. Um nun einen geraden Einlaufund einen geraden Auslauf des Seiles und eine gerade Führung zwischen den beiden Scheiben 17, 18 zu erreichen werden die beiden Scheiben gegeneinander um den Winkel geneigt. Dieser Winkel ist derart gewählt, daß beim Einlauf des Seiles eine Rillenbreite und beim Auslauf des Seiles eine Rillenbreite einer Versetzung erreicht wird.

Um keine zu kleinen Krümmungsradien für das Seil zu erreichen, wird der Scheibendurchmesser gegenüber dem Seildurchmesser groß gewählt.Die Anordnung von zwei Scheiben 17, 18 erfolgt deshalb, damit der bei einer Scheibe auftretende Spilleffekt nicht auftritt.

Darüber hinaus können natürlich um Seilverletzungen zu vermeiden, die Rillen 19 der Scheiben 17, 18 mit Kunststoff, insbesondere mit Neopren ausgekleidet werden. Die Rillen 19 sind natürlich so gewählt, daß das stärkste Seil mit Ziehhülse oder Ziehstrumpf noch darüber laufen kann.

Sollte die Platte 16 durch einen Rahmen ersetzt sein, der aus Formrohren aufgebaut ist, so kann dieser als Ölbehälter für die Hydraulikaggregate dienen. Vorteilhaft ist dabei, daß das sich bei Drosselung stark erwärmende Öl gekühlt wird.

## Patentansprüche

1. Einrichtung zum Verlegen eines Drahtes, Seiles od. dgl., insbesondere eines geschlagenen Mediums, vorzugsweise einer Oberleitung oder eines Fahrleitungssystems, oberhalb einer Fahrstrecke mit einem Fahrzeug bzw. einer Fahrzeuggarnitur, auf dem mindestens eine Drahttrommel gelagert ist und wenigstens ein heb-, senk- und schwenkbarer Hubarm zum Anheben des von der Drahttrommel ablaufenden Drahtes aufdie Montagehöhe oberhalb der Fahrstrecke vorgesehen ist, wobei pro Draht ein Hubarm vorgesehen ist und am freien Ende des Hubarmes eine einen gelagerten Grundrahmen aufweisende Vorrichtung zum Ausfahren, Einholen bzw. Festhalten des Drahtes dreh- und/oder schwenkbar angeordnet ist, dadurch gekennzeichnet, daß am Grundrahmen (22) oder aufeiner am Grundrahmen angeordneten Platte (16), zwei mit mindestens zwei Rillen (19) am Umfang versehene, gegeneinander geneigte, Scheiben (17, 18) oder Räder in einer Ebene gelagert sind, wobei das Seil (14) in den Rillen (19) über beide Scheiben (17, 18) geführt ist.

2. Einrichtung nach Anspruch 1, dadurch gekennzeichnet, daß die Scheiben (17, 18) oder Räder über Hydraulikaggregate (20) als Zug- und/oder Bremsmaschinen verwendbar sind.

3. Einrichtung nach Anspruch 1 oder 2, dadurch gekennzeichnet, daß die Platte (16) oder ein Rahmen am Grundrahmen (22) zur Grundrahmenebene senkrecht und parallel zur Laufrichtung des Seiles (14) angeordnet ist.

4. Einrichtung nach Anspruch 2 oder 3, dadurch gekennzeichnet, daß der aus Formrohren gebaute Rahmen für die Hydraulikaggregate (20) als Ölbehälter dient und die hydraulische Beaufschlagung, vorzugsweise beider Hydraulikaggregate (20) über ein, entsprechend umschaltbare hydraulische Pumpen und Ventile aufweisendes Regelsystem erfolgt.

5. Einrichtung nach einem der Ansprüche 1 bis 4, dadurch gekennzeichnet, daß der Grundrahmen (22) mittig schwenkbar gelagert ist.

6. Einrichtung nach Anspruch 5, dadurch gekennzeichnet, daß die schwenkbare mittige Grundrahmenlagerung (21) in einer am Hubarm (4, 5) angeordneten Zapfenlagerung (7) erfolgt.

7. Einrichtung nach mindestens einem der Ansprüche 1 bis 6, dadurch gekennzeichnet, daß die Zapfenlagerung (7) des Grundrahmens (22) unter dem Kraftausleitungspunkt der gesamten Vorrichtung (11) liegt.

8. Einrichtung nach mindestens einem der Ansprüche 1 bis 7, dadurch gekennzeichnet, daß vor bzw. nach den Scheiben (17, 18) eine Einlauf- (12) bzw. Auslauf-Rollenbatterie (13) angeordnet ist, wobei die Auslauf-Rollenbatterie (13) länger als die Einlauf-Rollenbatterie (12) ausgeführt ist.

## Claims

1. An equipment adapted to lay a wire, a cable or a similar element, especially a stranded element, preferably a catenary or contact line system, above a circulation track, including a vehicle or a vehicle equipment on which at least a cable drum is installed and at least a lifting jib is provided which can be raised, lowered and pivoted, with a view to raising the wire unwounded from the cable drum, at the mounting height, above the circulation track, with a lifting jib being provided per wire, and a device which includes a base frame, adapted to extract, re-enter and immobilize said wire, and which is rotatably and/or pivotably arranged at the free end of said lifting jig, characterized in that on said base frame (22) or on a plate (16) disposed on said base frame, are rotatably mounted in the same plane, two oppositely inclined disks (17, 18) or wheels, the periphery of which is provided with at least two throats (19), with the cable (14) being guided in said throats by passing on both disks (17, 18).

2. The equipment as recited in claim 1, characterized in that both disks (17, 18) or wheels can be used as driving and/or braking machines, through hydraulic sets (20).

3. The equipment as recited in claim 1 or 2, characterized in that said plate (16) or a frame on said base frame (22) is disposed orthogonally to the plane of said base frame and in parallel with the direction of cable (4) displacement.

4. The equipment as recited in claim 2 or 3, characterized in that said frame made of shaped tubes is used as an oil tank for the hydraulic sets (20), and the hydraulic supply, preferably of two hydraulic sets (20), is carried out through a regulating system including hydraulic pumps and suitably switchable valves.

5. The equipment as recited in any 1-4 claim, characterized in that said base frame (22) is mounted to be centrally pivoted.

6. The equipment as recited in claim 5, characterized in that the centrally pivoting (21) bearing of said base frame is arranged on a trunnion bearing system (7) arranged on the lifting jib (4, 5).

7. The equipment as recited in at least one of claims 1-6, characterized in that said trunnion bearing system (7) of said base frame (22) is arranged under the exit point of the stresses of the whole device (11).

8. The equipment as recited in at least one of claims 1-7, characterized in that before and after said disks (17, 18), a group of input rollers (12) and a group of output rollers (13) respectively are disposed, with the output rollers (13) group being longer than the input rollers (12) group.

## Revendications

1. Installation destinée à la pose d'un fil, d'un câble ou élément similaire, notamment d'un élément toronné, de préférence d'une ligne de caténaire ou d'un système de ligne de contact, au-dessus d'une voie de circulation, comprenant un véhicule ou un équipement de véhicule sur lequel est monté au moins un touret à fil et est prévue au moins une flèche de levage pouvant être soulevée, abaissée et pouvant pivoter, pour soulever le fil se déroulant du touret à fil, à la hauteur de montage, au-dessus de la voie de circulation, une flèche de levage étant prévue par fil, et un dispositif qui présente un cadre de base, destiné à extraire, à faire rentrer et à immobiliser le fil, étant agencé de manière rotative et/ou pivotante à l'extrémité libre de la flèche de levage, **caractérisée** en ce que sur le cadre de base (22) ou bien sur une plaque (16) disposée sur le cadre de base, sont montés en rotation dans un même plan, deux disques (17, 18) ou roues inclinées de manière opposée et pourvues d'au moins deux gorges (19) à la périphérie, le câble (14) étant guidé dans les gorges (19) en passant sur les deux disques (17, 18).

2. Installation selon la revendication 1, **caractérisée** en ce que les disques (17, 18) ou les roues peuvent être utilisés en tant que machines de traction et/ou de freinage, par l'intermédiaire de groupes hydrauliques (20).

3. Installation selon la revendication 1 ou 2, **caractérisée** en ce que la plaque (16) ou un cadre sur le cadre de base (22), est disposé perpendiculairement au plan du cadre de base et parallèlement à la direction de déplacement du câble (4).

4. Installation selon la revendication 2 ou 3, **caractérisée** en ce que le cadre construit en tubes de forme sert de réservoir d'huile pour les groupes hydrauliques (20), et l'alimentation hydraulique, de préférence des deux groupes hydrauliques (20), s'effectue par l'intermédiaire d'un système de régulation comprenant des pompes hydrauliques et des soupapes pouvant être commutées de manière appropriée.

5. Installation selon l'une des revendications 1 à 4, **caractérisée** en ce que le cadre de base (22) est monté de façon à pouvoir pivoter de manière centrale.

6. Installation selon la revendication 5, **caractérisée** en ce que le montage de palier de pivotement central (21) du cadre de base s'effectue sur un système de palier à tourillon (7) disposé sur la flèche de levage (4, 5).

7. Installation selon l'une au moins des revendications 1 à 6, **caractérisée** en ce que le système de palier à tourillon (7) du cadre de base (22) se situe en-dessous du point de sortie des efforts de l'ensemble du dispositif (11).

8. Installation selon l'une au moins des revendications 1 à 7, **caractérisée** en ce qu'avant et après les disques, (17, 18), sont disposées respectivement une batterie de rouleaux d'entrée (12) et une batterie de rouleaux de sortie (13), la batterie de rouleaux de sortie (13) étant réalisée plus longue que la batterie de rouleaux d'entrée (12).
